# EUROPÄISCHE PATENTSCHRIFT

(11) **EP 2 234 782 B1**
(45) Veröffentlichungstag und Bekanntmachung des Hinweises auf die Patenterteilung: **22.02.2012**
(21) Anmeldenummer: 08871682.4
(22) Anmeldetag: 04.11.2008
(51) Int. Cl.: B29C 35/02, B29D 30/06, B60C 11/00, B29C 33/42

(54) **REIFENVULKANISIERFORM UND MIT DIESER REIFENVULKANISIERFORM HERGESTELLTER REIFEN**
TYRE VULCANIZING MOULD AND TYRE PRODUCED USING SAID TYRE VULCANIZING MOULD
MOULE DE VULCANISATION DE BANDAGE ET BANDAGE FABRIQUÉ AVEC CE MOULE DE VULCANISATION DE BANDAGE

(30) Priorität: 30.01.2008 EP 08150813
(43) Veröffentlichungstag der Anmeldung: 06.10.2010
(73) Patentinhaber: Continental Reifen Deutschland GmbH, 30165 Hannover (DE)
(72) Erfinder: WENZEL, Karsten, 31691 Helpsen (DE)
(74) Vertreter: Finger, Karsten
(86) Internationale Anmeldenummer: PCT/EP2008/064903
(87) Internationale Veröffentlichungsnummer: WO 2009/095099

(56) Entgegenhaltungen:
- EP-A- 0 668 136
- WO-A-97/11827
- DE-A1- 3 736 855
- DE-A1- 4 207 210
- JP-A- 2 147 411
- JP-A- 2004 224 213
- US-A- 5 874 489

## Beschreibung

Die Erfindung betrifft eine Vulkanisierform für Reifen aus zumindest zwei Formsegmenten, deren Formflächen gemeinsam auch das Laufstreifenprofil eines zu vulkanisierenden Reifens formen und welche eine mantelförmige Fläche mit Erhebungen, wie vorzugsweise Stegen, aufweisen, wobei die mantelförmige Fläche die mantelförmige Laufstreifenprofilfläche des Reifens formt und wobei die Erhebungen die Vertiefungen, wie vorzugsweise Nuten, im Laufstreifenprofil des Reifens einprägen, wobei die das Laufstreifenprofil formenden Formflächen der Formsegmente bereichsweise mit einer Rauhigkeit versehen sind.

Die Erfindung betrifft ferner einen mit einer vorgenannten Vulkanisierform hergestellten Reifen.

Eine derartige Reifenvulkanisierform ist aus der DE 3736 855 A1 bekannt geworden.

Vulkanisierformen für Reifen bestehen unter anderem aus Formsegmenten, welche gemeinsam die radial äußere Oberfläche des Reifens, wie den Laufstreifen, den Schulterbereich, die Seitenwände und den Wulstbereich formen. Die Formsegmente der Vulkanisierformen für Reifen sind aus Metall gefertigt, üblicherweise aus Stahl oder Aluminium. Die Formteile werden durch Gießverfahren oder durch direkte Fräsverfahren aus Vollmaterialien hergestellt. Dem Fachmann sind mittengeteilte Vulkanisierformen und segmentierte Vulkanisierformen hinreichend bekannt.

Der unvulkanisierte grüne Reifenrohling wird in der Vulkanisierform heizgepresst und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Unter Formflächen sind diejenigen Flächen der Formsegmente gemeint, die dem Reifenrohling seine entsprechende Gestaltung geben.

Problematisch ist nun, dass Kautschukreste nach erfolgter Vulkanisation an den Formflächen der Formsegmente anhaften. Eine derartige, die Vulkanisierform verschmutzende Anhaftung ist unerwünscht, weil mit einer verschmutzten Vulkanisierform nur unsaubere, nicht erwünschte Reifenoberflächen formbar sind. Die Vulkanisierform muss daher zeit- und kostenaufwendig nach wenigen Vulkanisationszyklen gereinigt werden und steht während der Reinigungszeit als Formwerkzeuge nicht zur Verfügung.

Daher ist es nach heutigem Stand der Technik üblich, Sprühlösungen vor dem Vulkanisationsvorgang auf die formenden Flächen der Formsegmente der Vulkanisierform aufzusprühen. Die Sprühlösung soll bewirken, dass kein oder nur sehr wenig Gummimaterial an der Form anhaftet.

Nachteilig an dem Einsatz der Sprühlösung ist jedoch, dass einerseits vor dem Vulkanisationszyklus ein zusätzlicher Verfahrensschritt des Einsprühens der Formen erfolgen muss. Andererseits ist diese Sprühlösung ebenfalls auf den Reifenoberflächen, insbesondere auf der Laufstreifenmantelfläche des in einer mit Sprühlösung vorbehandelten Vulkanisierform vulkanisierten Reifens aufgetragen, wodurch der Reifen während seiner ersten Betriebszeit nicht seinen optimalen Grip auf der Fahrbahnoberfläche entfalten kann.

Des Weiteren ist es gewünscht, dass ein Reifen einen optischen Kontrast zwischen Nut und mantelförmiger Laufstreifenoberfläche aufweist. Hierzu war bisher erforderlich, dass die Erhebungen der Formfläche des Formsegmentes, welche die Vertiefungen wir Nuten in den Reifenrohling einprägen, poliert werden mussten. Dies ist eine sehr zeitaufwendige Arbeit, die zudem aufgrund der geringen Größe der Erhöhungen viel Feingeschick erfordert.

Es ist daher die Aufgabe der Erfindung, eine einfach und kostengünstig herzustellende Vulkanisierform bereitzustellen, bei der das Kautschukmaterial des zu vulkanisierenden Reifens auch ohne Vorbehandlung vor dem Vulkanisationsvorgang weniger anhaftet und bei dem der mit einer derartigen Form heizgepresste Reifen auch in seiner ersten Betriebszeit einen guten Grip und den erwünschten optischen Kontrast zwischen Nut und Mantelfläche des Laufstreifens aufweist.

Was die Vulkanisierform betrifft, wird die Aufgabe erfindungsgemäß gelöst, indem die die mantelförmige Laufstreifenprofilfläche formenden Bereiche der Vulkanisierform mit der Rauhigkeit versehen sind, während die die Vertiefungen, wie vorzugsweise Nuten, einprägenden Erhebungen nicht mit dieser Rauhigkeit versehen, sondern glatt sind und dass die Rauhigkeit durch Applikation einer thermischen Spritzschicht auf die Formflächen der Formsegmente der Vulkanisierform gebildet ist.

Desweiteren wird die obenstehende Aufgabe gemäß der Erfindung durch einen Reifen nach Patentanspruch 10 gelöst.

Vorteilhafte Weiterbildungen der Erfindung sind Gegenstand der betreffenden abhängigen Ansprüche.

Es hat sich überraschenderweise gezeigt, dass das Anhaften von Gummimaterial an der Formfläche des Formsegmentes dadurch minimiert werden kann, dass die mantelförmige, die Laufstreifenoberfläche prägende Formfläche eine definierte Rauhigkeit aufweist. Dadurch, das die Rauhigkeit durch Applikation einer thermischen Spritzschicht auf die Formteile der Vulkanisierform aufgebracht ist, kann besonders gut an bestimmten Bereichen -hier vorzugsweise der mantelförmigen Formfläche des Laufstreifenprofils- der Formfläche des Formsegmentes definierte Rauhigkeiten auf die Oberfläche der Formfläche aufgebracht und mit dieser verklammert werden. Die Spritzzusätze, welche mit diesem Verfahren auf die Formfläche des Formsegmentes aufgebracht werden und die erwünschte Rauhigkeit bewirken, sollten dabei eine ausreichende Härte für die im Vulkanisationsprozess auftretenden Kräfte aufweisen, so dass eine lange Haltbarkeit des Formsegmentes der Vulkanisierform erhalten ist.

Hierdurch kann auf den bisher notwendigen Einsatz einer Sprühlösung verzichtet werden. Denn in den Rauhtiefen befindet sich Luft, welche während der Vulkanisation komprimiert ist, so dass das Gummimaterial nur mit den Rauhspitzen der Formfläche des Formsegmentes in Berührung kommt. Dieses hat zur Folge, dass die Kontaktfläche zwischen Kautschukmaterial und Formfläche des Formsegments gegenüber herkömmlichen Formsegmenten verringert ist und ein Anhaften von Gummimaterial an der Formfläche minimiert ist. Hierdurch löst sich der fertig vulkanisierte Reifen leicht aus der Form und das Anhaften von Gummimaterial an der Formfläche ist minimiert.
Dabei ist Voraussetzung, dass die Rauhigkeiten derart dimensioniert sind, dass Gummimaterial nicht in die durch die Rauhigkeit bedingten Rauhtiefen eindringen kann.

Was den mit der Vulkanisierform vulkanisierten Reifen betrifft, wird die Aufgabe dadurch gelöst, dass der Reifen ein Laufstreifenprofil aufweist, dessen mantelförmige Laufstreifenprofilfläche eine Rauhigkeit aufweist, während die Nuten diese Rauhigkeit vollständig oder teilweise nicht aufweisen, sondern glatt sind. Der Reifen weist in seiner ersten Betriebszeit einen guten Grip dadurch auf, weil einerseits die Laufstreifenoberfläche nicht mit der Antihaft-Sprühlösung bedeckt ist und andererseits, weil die Oberfläche Rauhigkeiten aufweist, welche eine Mikroverzahnung des Kautschukmaterials der Laufstreifenoberfläche mit dem Fahrbahnuntergrund ermöglicht. Des Weiteren ist der erwünschte optische Kontrast zwischen glatten Nuten und der mantelförmigen Laufstreifenoberfläche durch die Rauhigkeit der mantelförmigen Laufstreifenoberfläche und den glatten Nuten erreicht.

Unter "glatt" wird in dieser Anmeldung eine Rauhigkeit mit einer Rauhtiefe verstanden, die kleiner gleich 3µm ist.

Weitere vorteilhafte Ausgestaltungen der Vulkanisierform werden nachfolgend beschrieben.
In einer bestimmten Ausführungsform ist das Seitenschalensegment der Vulkanisierform, welche die Seitenwand des zu vulkanisierenden Reifens formt, zumindest bereichsweise mit einer Rauhigkeit versehen ist. Hierdurch ist die Gefahr von Gummianhaftungen an der Seitenschale ebenfalls minimiert.

Es hat sich gezeigt, dass die besten Ergebnisse, die Anhaftung von Gummimaterial an der Formfläche des Formsegmentes zu minimieren, durch eine Rauhigkeit mit einem Oberflächenprofil von 5 - 50µm, vorzugsweise von 7,5 - 15µm, besonders vorzugsweise von 9,5 - 15 µm, erreicht werden.

Vorteilhaft ist es, wenn die thermische Spritzschicht aus einer Matrix und aus in dieser Matrix statistisch verteilten Spritzzusätzen besteht, wobei die Spritzzusätze die Rauhigkeit bestimmen. Die Spritzzusätze können Körner sein, die beispielsweise in Bezug auf ihre Korngröße, ihre Struktur, ihre äußere Korngestalt und ihre Härte entsprechend der für die Spritzschicht erwünschten Eigenschaften auswählbar sind. Somit ist die Rauhigkeit der Vulkanisierform unabhängig von der Materialbeschaffenheit der Vulkanisierform. Es ist eine Möglichkeit geschaffen, die erwünschte Rauhigkeit durch die Auswahl einer geeigneten thermischen Spritzschicht, insbesondere durch die Spritzzusatzwahl, einzustellen.

Zudem kann ebenfalls der Matrixwerkstoff entsprechend der erwünschten Eigenschaften gewählt werden. Beispielsweise kann ein Matrixwerkstoff gewählt werden, der ein leichtes Ablösen des vulkanisierten Reifens aus der Form ermöglicht.

Es kann beispielsweise eine aus Aluminium bestehende Vulkanisierform im Bereich ihrer Formfläche mit einer thermischen Spritzschicht überzogen werden, welche eine größere Härte als die aus Aluminium bestehende Vulkanisierform aufweist. Somit ist eine haltbare, verschleißarme Vulkanisierform geschaffen.

Somit sind die Eigenschaften der thermischen Spritzschicht durch wählbare Parameter der Matrix und/oder der Spritzzusätze beeinflussbar, so dass deren Rauhigkeitsstruktur und deren Haltbarkeit - unabhängig von dem Werkstoff der Vulkanisierform - einstellbar ist.

In einer anderen Ausführungsform sind die die mantelförmige Laufstreifenprofilfläche formenden Bereiche der Vulkanisierform vollständig mit der Rauhigkeit versehen und die die Vertiefungen, wie vorzugsweise Nuten, einprägenden Erhebungen partiell nicht mit dieser Rauhigkeit versehen. Je nach zu heizpressender Profilgestaltung kann es für die Minimierung der Anhaftung des Gummimateriales zweckmäßig sein, die Stege/Erhöhungen von schwer zu entformenden Nuten/Vertiefungen partiell ebenfall mit Rauhigkeit zu versehen.

Die Vulkanisierform kann eine mittengeteilte Vulkanisierform sein. Erfindungsgemäß kann die Vulkanisierform auch eine segmentierte Vulkanisierform sein, welche eine Vielzahl von äußeren, radial verfahrbaren Formsegmenten aufweist, welche von einer sie umgebenden ringförmigen Struktur mit einer in Formsegmenten zugewandten Gleitfläche zusammengehalten werden.

Die Vulkanisierform ist zum Vulkanisieren von Reifen einsetzbar. Insbesondere zum Vulkanisieren von Motorradreifen oder von UltraHighPerformance-PKW-Reifen. UltraHighPerformance-PKW-Reifen zeichnen sich unter anderem dadurch aus, dass sie für Geschwindigkeiten bis etwa 360 km/h ausgelegt sind.

Ein mit einer der vorgenannten Ausführungsformen der Vulkanisierform vulkanisierter Reifen weist vorteilhafterweise eine Rauhtiefe der mantelförmigen Lauffläche 5 -50 µm, vorzugsweise 7,5 - 15 µm auf. Durch eine derartige Rauhtiefe weist der erfindungemäße Reifen auch in der ersten Betriebszeit einen guten Grip auf, während der vom Verbraucher erwünschte optische Kontrast zwischen Laufstreifenoberfläche und Nut erhalten ist.

Insbesondere Motorradreifen weisen in ihrer ersten Betriebszeit einen guten Grip durch die auf der Laufstreifenmantelfläche ausgebildete Rauhigkeit auf. Bisher müssen Motorradreifen etwa die ersten 200km sehr vorsichtig eingefahren werden. Denn bei Motorradreifenprofilen weist das Laufstreifenprofil vorwiegend glatte Laufflächenbereiche und weniger Nuten auf. Daher ist es besonders vorteilhaft, Motorradreifen mit einer Rauhigkeit zu versehen, die während der ersten Betriebszeit den Grip des Reifens gegenüber bekannten Reifen verbessern.
Insbesondere auch für UltraHighPerformance-Reifen ist die Rauhigkeit für die erste Betriebszeit vorteilhaft.

Die glatten Nuten weisen einen weiteren Effekt auf. Sie dienen der verbesserten Wasserabführung, so dass der mit glatten Nuten und angerauter Oberfläche ausgestattete Reifen auch bei Regen eine verbesserte Performance aufweisen.

Weitere Merkmale, Vorteile und Einzelheiten der Erfindung werden anhand der Zeichnungen, die schematische Ausführungsbeispiele darstellen, näher erläutert. Es zeigen die
- Fig. 1: eine Aufsicht auf die ringkreisformig angeordneten Formsegmente einer segmentierten Vulkanisierform für Motorradreifen;
- Fig.2: einen Schnitt A-A durch ein Formsegment der Figur 1;
- Fig.3: einen Radialschnitt durch einen Motorradreifen, welcher mit Formsegmenten der Figuren 1,2 vulkanisiert worden ist;
- Fig.4: eine Aufsicht auf das Laufstreifenprofil des Motorradreifens der Figur 3;
- Fig.5: eine Aufsicht auf die ringkreisförmig angeordneten Formsegmente einer segmentierten Vulkanisierform für UHP-Reifen;
- Fig.6: einen Schnitt A-A durch ein Formsegment der Figur 5;
- Fig.7: einen Radialschnitt durch einen UHP-Reifen, welcher mit Formsegmenten der Figuren 5,6 vulkanisiert worden ist;
- Fig.8: eine Aufsicht auf das Laufstreifenprofil des UHP-Reifens der Figur 7.

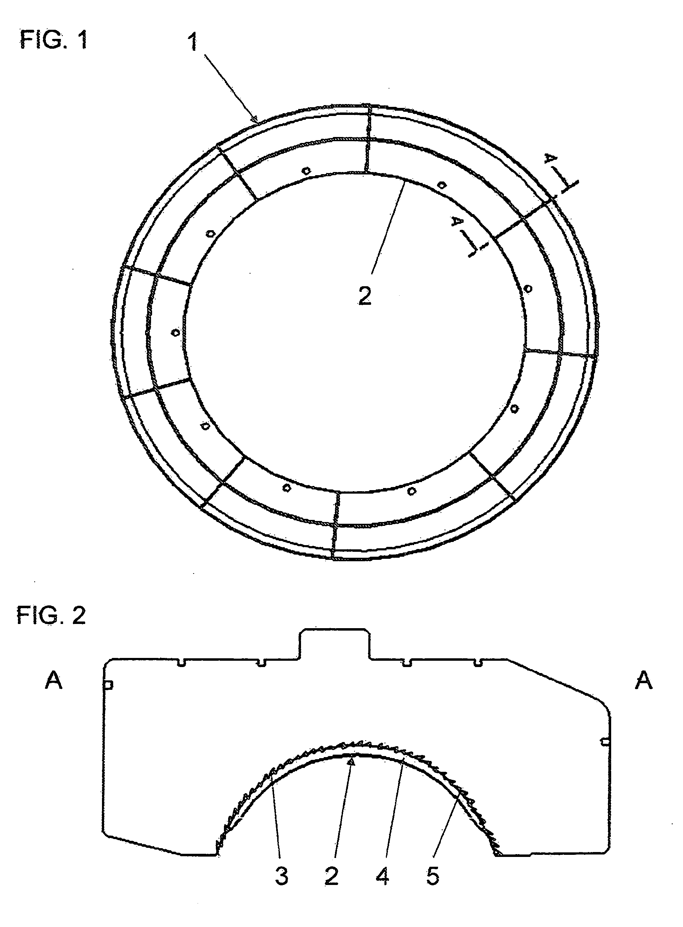

Die Fig. 1 zeigt eine Aufsicht auf die ringkreisförmig angeordneten Formsegmente 1 einer segmentierten Vulkanisierform für Motorradreifen.
Vulkanisierformen werden in der Reifenindustrie fachsprachlich als Container bezeichnet. Es sind dabei Ausführungsformen mit festem inneren Kern bekannt, sowie Ausführungsformen, bei denen ein aufblasbarer toroidaler Gummischlauch während des Vulkanisationsprozesses von innen her den Reifenrohling gegen die Vulkanisationsform drückt. Durch das Verfahren des die Formsegmente gegen den Innendruck zusammenhaltenden Ringes in axialer Richtung werden die Formsegmente radial nach außen verfahren und so die Form nach Abschluss des Formprozesses bzw. des Vulkanisationsvorganges, währenddessen das Reifenprofil und die gestalterischen Elemente der Seitenwand geschaffen werden, geöffnet.

Die Vulkanisierform weist neun radial verfahrbare Formsegmente 1 auf, welche von einer sie umgebenden ringförmigen Struktur (Ring) mit einer den Formsegmenten zugewandten Gleitfläche zusammengehalten werden (nicht dargestellt). Es sind ebenfalls Vulkanisierformen mit einer Anzahl von 7 bis 14 Formsegmenten bekannt. Die beiden Seitenschalen, welche die Reifenseiten formen, sind ebenfalls nicht dargestellt. Wie aus Fig. 2 ersichtlich ist, weist jedes Formsegment 1 eine Formfläche 2 auf, wobei durch die Formflächen 2 der Formsegmente 1 das äußere Erscheinungsbild des Reifens, hier: das Laufstreifenprofil des zu vulkanisierenden Reifens, geformt wird. Die Formfläche 2 weist eine mantelförmige Fläche 3 mit Erhebungen 4 auf, wobei die mantelförmige Fläche 3 die mantelförmige Laufstreifenprofilfläche des Reifens formt und wobei die Erhebungen 4 die Vertiefungen, wie vorzugsweise Nuten, im Laufstreifenprof des Reifens einprägen. Die Formflächen 2 sind erfindungsgemäß derart gestaltet, dass die die mantelförmige Laufstreifenprofilfläche formenden Bereiche 3 der Vulkanisierform mit Rauhigkeit 5 versehen sind, während die die Nuten einprägenden Stege 4 nicht mit dieser Rauhigkeit versehen, sondern glatt sind. Die Rauhtiefe der mantelförmigen Fläche beträgt zwischen 7,5 -15 µm, während die glatten Erhebungen 4 Rauhigkeiten kleiner gleich 3 µm aufweisen. Das Formsegment 1 besteht aus Aluminium. Die Rauhigkeiten sind als Oberflächenbeschichtung auf die mantelförmigen Fläche 3 der Formfläche 2 mittels eines thermischen Spritzverfahrens aufgebracht, während die Erhebungen 4 keine Oberflächenbeschichtung aufweisen und dadurch glatt sind.

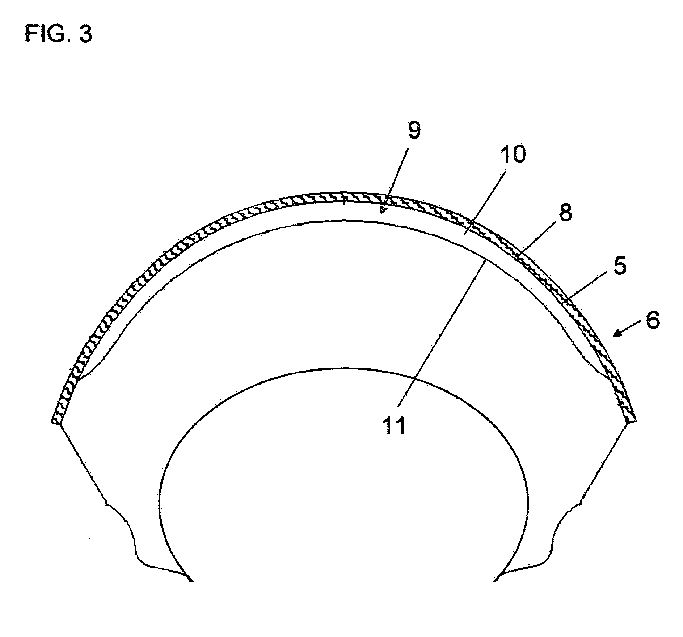

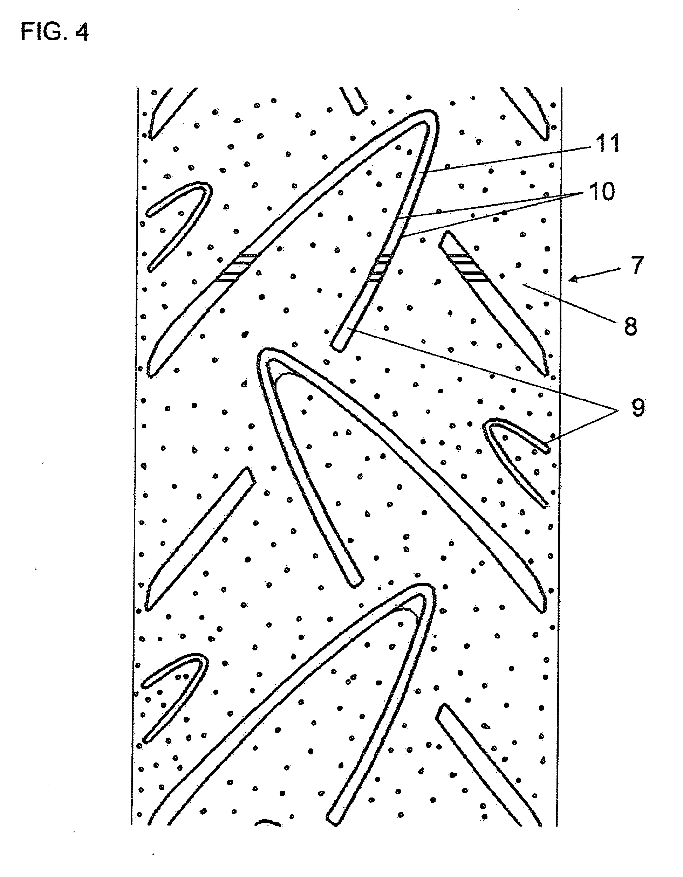

In der Fig. 3 ist ein Radialschnitt durch einen Motorradreifen 5, welcher mit Formsegmenten 1 der Figuren 1,2 vulkanisiert worden ist, dargestellt. Die Fig. 4 zeigt eine Aufsicht auf das Laufstreifenprofll 7 des Motorradreifens der Fig. 3. Ein mit einer in den Fig. 1,2 beschriebenen Vulkanisierform vulkanisierter Mororradreifen 5 weist eine Rauhtiefe der mantelförmigen Lauffläche 7 von 7,5 - 15 µm auf. Die Rauhigkeit 5 der Laufstreifenoberfläche ist in der Fig.4 schematisch durch eine Punktierung dargestellt. Die Nuten 9 sind glatt. Die Nuten 9 bestehen aus je zwei Rillenflanken 10 und einem die Rillenflanken 10 verbindenen Rillengrund 11. Sowohl die Rillenflanken 10, als auch der Rillengrund 11 der Nuten 9 sind glatt. Durch eine vorbeschriebene Rauhtiefe weist der erfindungemäße Reifen 6 auch in der ersten Betriebszeit einen guten Grip auf, während der vom Verbraucher erwünschte optische Kontrast zwischen Laufstreifenoberfläche, welche Rauhigkeit aufweist, und der Nuten, welche glatt sind, erhalten ist.

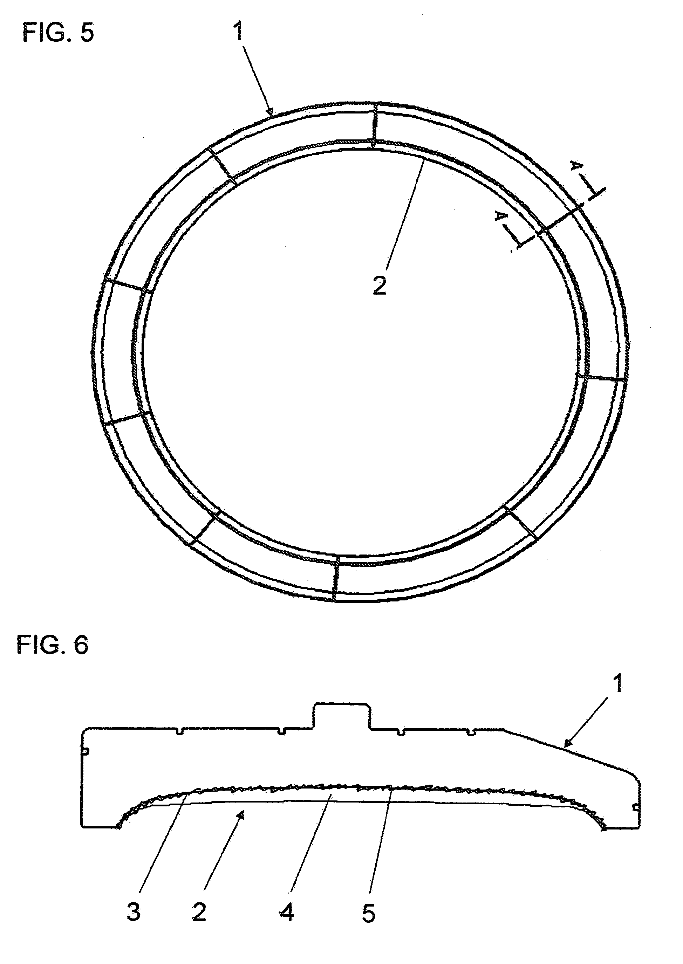

Die Fig. 5 zeigt eine Aufsicht auf die ringkreisförmig angeordneten Formsegmente 1 einer segmentierten Vulkanisierform für einen UHP-Reifen für PKW.

Die Vulkanisierform weist neun radial verfahrbare Formsegmente 1 auf, welche von einer sie umgebenden ringförmigen Struktur (Ring) mit einer den Formsegmenten zugewandten Gleitfläche zusammengehalten werden (nicht dargestellt). Die beiden Seitenschalen, welche die Reifenseiten formen, sind ebenfalls nicht dargestellt. Wie aus Fig. 6 ersichtlich ist, weist jedes Formsegment 1 eine Formfläche 2 auf, wobei durch die Formfläche 2 der Formsegmenten 1 das äußere Erscheinungsbild des Reifens, hier: das Laufstreifenprofil des zu vulkanisierenden UHP-Reifens, geformt wird. Die Formfläche 2 weist eine mantelförmige Fläche 3 mit Stegen oder anders geformten Erhebungen 3 auf, wobei die mantelförmige Fläche 3 die mantelförmige Laufstreifenprofilfläche des Reifens formt und wobei die Erhebungen 4 die Vertiefungen, wie vorzugsweise Nuten, in das Laufstreifenprofil des UHP-Reifens einprägen. Die Formflächen 2 sind erfindungsgemäß derart gestaltet, dass die die mantelförmige Laufstreifenprofilfläche 8 formenden Bereiche 3 der Vulkanisierform mit Rauhigkeit 5 versehen sind, während die die Nuten 9 einprägenden Stege 4 nicht mit dieser Rauhigkeit versehen, sondern glatt sind. Die Rauhigkeit 5 ist durch eine Zick-Zack-Linie schematisch angedeutet. Die Rauhtiefe der mantelförmigen Lauffläche beträgt zwischen 7,5 - 15 µm, während die glatten Erhebungen 4 Rauhigkeiten kleiner gleich 3 µm aufweisen. Das Formsegment 1 besteht aus Aluminium. Die Rauhigkeiten sind als Oberflächenbeschichtung auf die mantelförmigen Fläche 3 der Formfläche 2 mittels eines thermischen Spritzverfahrens aufgebracht, während die Erhebungen 4 keine Oberflächenbeschichtung aufweisen, sondern beim Aufbringen der thermischen Spritzschicht ausgespart worden sind und dadurch glatt sind.

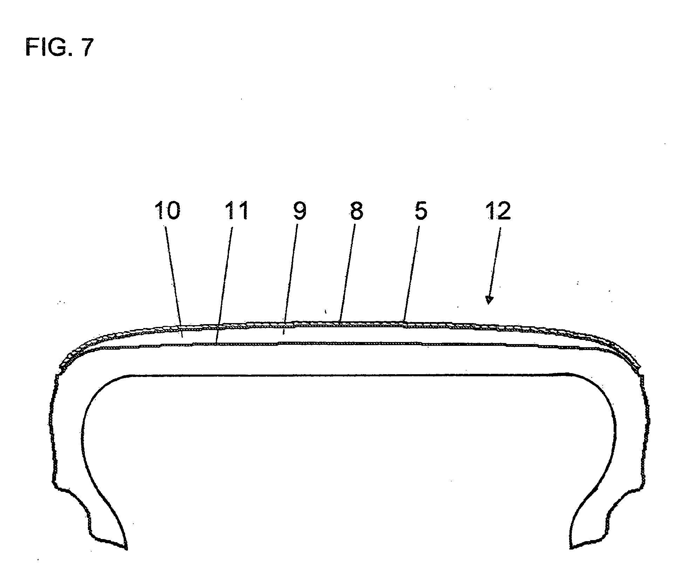

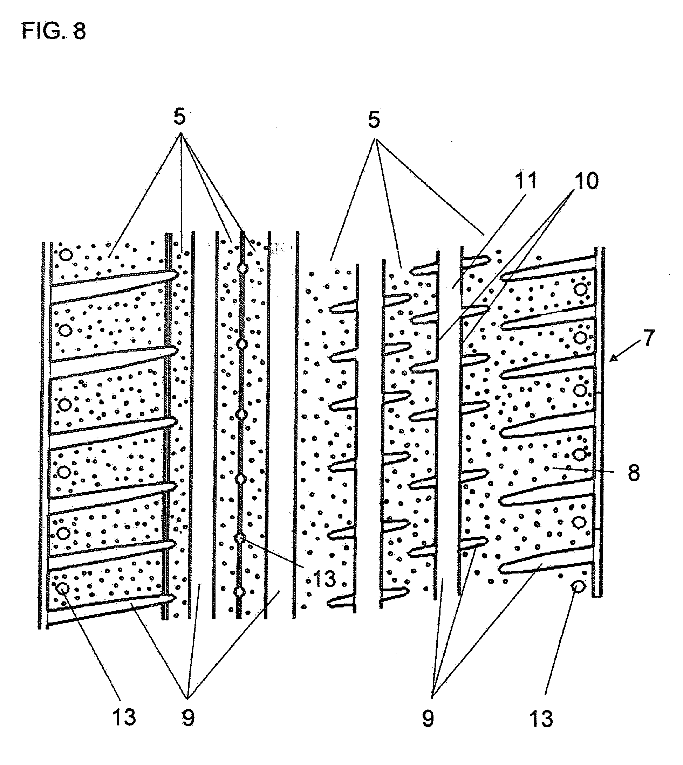

In der **Fig. 7** ist ein Radialschnitt durch einen UHP-Reifen 12, welcher mit Formsegmenten 1 der Figuren 5,6 vulkanisiert worden ist, dargestellt. Die **Fig. 8** zeigt eine Aufsicht auf das Laufstreifenprofil des UHP-Reifens der Fig. 7. Ein mit einer in den Fig. 5,6 beschriebenen Vulkanisierform vulkanisierter UHP-Reifen 5 weist eine Rauhtiefe der mantelförmigen Lauffläche 7, welche aus Profilpositiven- hier aus Profilbändern- besteht von 7,5 - 15 µm auf. Die Rauhigkeit 5 der Laufstreifenoberfläche ist in der Fig.8 schematisch durch eine Punktierung dargestellt. Die Nuten 9 und Vertiefungen 13 sind glatt. Die Nuten 9 bestehen aus je zwei Rillenflanken und einem die Rillenflanken verbindenden Rillengrund. Sowohl die Rillenflanken, als auch der Rillengrund der Nuten 9 sind glatt. Durch eine vorbeschriebene Rauhtiefe weist der erfindungemäße Reifen auch in der ersten Betriebszeit einen guten Grip auf, während der vom Verbraucher erwünschte optische Kontrast zwischen Laufstreifenoberfläche, welche Rauhigkeit aufweist, und der Nuten, welche glatt sind, erhalten ist.

### Bezugszeichenliste

- 1: Formsegment
- 2: Formfläche
- 3: Mantelförmige Fläche
- 4: Erhebung
- 5: Rauhigkeit
- 6: Motorradreifen
- 7: Laufstreifenprofil
- 8: Mantelförmige Lauffläche
- 9: Nut
- 10: Rillenflanke
- 11: Rillengrund
- 12: UHP-Reifen

## Patentansprüche

1. Vulkanisierform für Reifen aus zumindest zwei Formsegmenten (1), deren Formflächen (2) gemeinsam auch das Laufstreifenprofil (7) eines zu vulkanisierenden Reifens (6,12) formen und welche eine mantelförmige Fläche (3) mit Erhebungen (4), wie vorzugsweise Stegen, aufweisen, wobei die mantelförmige Fläche (3) die mantelförmige Laufstreifenprofilfläche (8) des Reifens formt und wobei die Erhebungen (4) die Vertiefungen (9), wie vorzugsweise Nuten, im Laufstreifenprofil (7) des Reifens einprägen, wobei die das Laufstreifenprofil (7) formenden Formflächen (2) der Formsegmente (1) bereichsweise mit einer Rauhigkeit (5) versehen sind,
**dadurch gekennzeichnet,**
**dass** die die mantelförmige Laufstreifenprofilfläche formenden Bereiche (3) der Vulkanisierform mit der Rauhigkeit (5) versehen sind, während die die Vertiefungen (9), wie vorzugsweise Nuten, einprägenden Erhebungen (4) nicht mit dieser Rauhigkeit (5) versehen, sondern glatt sind und dass die Rauhigkeit (5) durch Applikation einer thermischen Spritzschicht auf die Formflächen (2) der Formsegmente (1) der Vulkanisierform gebildet ist.

2. Vulkanisierform nach Anspruch 1,
**dadurch gekennzeichnet, dass** das Seitenschalensegment der Vulkanisierform, welche die Seitenwand des zu vulkanisierenden Reifens (6,12) formt, zumindest bereichsweise mit einer Rauhigkeit (5) versehen ist.

3. Vulkanisierform nach einem der vorangehenden Ansprüche,
**dadurch gekennzeichnet, dass** die Rauhigkeit (5) durch ein Oberflächenprofil von 5 - 50µm, vorzugsweise von 7,5 - 15µm, besonders vorzugsweise von 9,5 - 15 µm gebildet ist.

4. Vulkanisierform nach Anspruch 1,
**dadurch gekennzeichnet, dass** die thermische Spritzschicht aus einer Matrix und aus in der Matrix statistisch verteilten Spritzzusätzen besteht, wobei die Spritzzusätze die Rauhigkeit bestimmen.

5. Vulkanisierform nach Anspruch 1 oder 4,
**dadurch gekennzeichnet, dass** die Zusätze Körner sind.

6. Vulkanisierform nach einem oder mehreren der vorangehenden Ansprüche,
**dadurch gekennzeichnet, dass** die die mantelförmige Laufstreifenprofilfläche formenden Bereiche (3) der Formflächen (2) der Formsegmente (1) vollständig mit der Rauhigkeit (5) versehen sind und die die Vertiefungen, wie vorzugsweise Nuten, einprägenden Erhebungen (4) partiell nicht mit dieser Rauhigkeit (5) versehen sind.

7. Vulkanisierform nach einem oder mehreren der vorangehenden Ansprüche,
**dadurch gekennzeichnet, dass** die Vulkanisierform eine mittengeteilte Vulkanisierform ist.

8. Vulkanisierform nach einem oder mehreren der Ansprüche 1-6
**dadurch gekennzeichnet, dass** die Vulkanisierform eine segmentierte Vulkanisierform ist, welche eine Vielzahl von äußeren, radial verfahrbaren Formsegmenten (1) aufweist, welche von einer sie umgebenden ringförmigen Struktur mit einer in Formsegmenten (1) zugewandten Gleitfläche zusammengehalten werden.

9. Vulkanisierform nach einem oder mehreren der vorangehenden Ansprüche,
**dadurch gekennzeichnet, dass** die Vulkanisierform zum Vulkanisieren eines Reifens (6) eines Zweirades, insbesondere eines Motorrades und zum Vulkanisieren eines PKW-Reifens (12), insbesondere eines UltraHighPerformance-Reifens, einsetzbar ist.

10. Reifen, welcher mit einer Vulkanisierform nach einem oder mehreren der Ansprüche 1- 8 vulkanisiert ist,
**dadurch gekennzeichnet,**
**dass** der Reifen (6,12) ein Laufstreifenprofil (7) aufweist, dessen mantelförmige Laufstreifenprofilfläche (8) eine Rauhigkeit (5) aufweist, während die Vertiefungen wie Nuten (9) diese Rauhigkeit (5) vollständig oder teilweise nicht aufweisen, sondern glatt sind.

11. Reifen nach Anspruch 10,
**dadurch gekennzeichnet, dass** die Rauhtiefe der mantelförmigen Lauffläche 5 -50 µm, vorzugsweise 7,5 - 15 µm beträgt.

12. Reifen nach einem der Ansprüche 10 und 11,
**dadurch gekennzeichnet, dass** der Reifen ein Motorradreifen (6), ein Personenkraftwagenreifen (12,), ein Light Truck-Reifen oder ein LKW-Reifen ist.

## Claims

1. Vulcanizing mold for tires comprising at least two mold segments (1), the forming areas (2) of which jointly also form the tread rubber profile (7) of a tire (6, 12) to be vulcanized and have a casing-shaped area (3) with elevations (4), such as preferably webs, wherein the casing-shaped area (3) forms the casing-shaped tread rubber profile area (8) of the tire and wherein the elevations (4) impress the depressions (9), such as preferably grooves, in the tread rubber profile (7) of the tire, wherein the forming areas (2) of the mold segments (1) that form the tread rubber profile (7) are provided in certain regions with a roughness (5), **characterized in that** the regions (3) of the vulcanizing mold that form the casing-shaped tread rubber profile area are provided with the roughness (5), while the elevations (4) that impress the depressions (9), such as preferably grooves, are not provided with this roughness (5) but instead are smooth, and **in that** the roughness (5) is formed by application of a thermally sprayed layer to the forming areas (2) of the mold segments (1) of the vulcanizing mold.

2. Vulcanizing mold according to Claim 1, **characterized in that** the side shell segment of the vulcanizing mold that forms the side wall of the tire (6, 12) to be vulcanized is provided at least in certain regions with a roughness (5).

3. Vulcanizing mold according to one of the preceding claims, **characterized in that** the roughness (5) is formed by a surface profile of 5 - 50 µm, preferably of 7.5 - 15 µm, particularly preferably of 9.5 - 15 µm.

4. Vulcanizing mold according to Claim 1, **characterized in that** the thermally sprayed layer consists of a matrix and spraying agents randomly distributed in the matrix, the spraying agents determining the roughness.

5. Vulcanizing mold according to Claim 1 or 4, **characterized in that** the agents are grains.

6. Vulcanizing mold according to one or more of the preceding claims, **characterized in that** the regions (3) of the forming areas (2) of the mold segments (1) that form the casing-shaped tread rubber profile area are completely provided with the roughness (5), and the elevations (4) that impress the depressions, such as preferably grooves, are partially not provided with this roughness (5).

7. Vulcanizing mold according to one or more of the preceding claims, **characterized in that** the vulcanizing mold is a centrally divided vulcanizing mold.

8. Vulcanizing mold according to one or more of Claims 1-6, **characterized in that** the vulcanizing mold is a segmented vulcanizing mold which has a multitude of outer, radially movable mold segments (1) that are held together by an annular structure surrounding them, with a sliding area facing the mold segments (1).

9. Vulcanizing mold according to one or more of the preceding claims, **characterized in that** the vulcanizing mold can be used for vulcanizing a tire (6) of a two-wheeled vehicle, in particular a motorcycle, and for vulcanizing a car tire (12), in particular an ultra-high-performance tire.

10. Tire which is vulcanized by a vulcanizing mold according to one or more of Claims 1 - 8, **characterized in that** the tire (6, 12) has a tread rubber profile (7) of which the casing-shaped tread rubber profile area (8) has a roughness (5), whereas the grooves (9) are completely or partially without this roughness (5) but instead are smooth.

11. Tire according to Claim 10, **characterized in that** the roughing depth of the casing-shaped tread area is 5 - 50 µm, preferably 7.5 - 15 µm.

12. Tire according to either of Claims 10 and 11, **characterized in that** the tire is a motorcycle tire (6) a car tire (12), a light truck tire or a heavy truck tire.

## Revendications

1. Moule de vulcanisation de bandages de roues, constitué d'au moins deux segments de moule (1) dont les surfaces de moulage (2) forment ensemble également le profil (7) de bande de roulement d'un bandage de roue (6, 12) à vulcaniser,
les segments de moule présentant une surface d'enveloppe (3) dotée de saillies (4), de préférence des nervures,
la surface d'enveloppe (3) formant la surface d'enveloppe (8) du profil de la bande de roulement du bandage de roue,
les saillies (4) formant les creux (9), de préférence des rainures, dans le profil (7) de la bande de roulement du bandage de roue, certaines parties des surfaces de moulage (2) des segments de moule (1) qui forment le profil (7) de la bande de roulement étant dotées d'une rugosité (5),
**caractérisé en ce que**
les parties (3) du moule de vulcanisation qui forment la surface d'enveloppe du profil de la bande de roulement sont dotées de la rugosité (5) tandis que les saillies (4) qui forment les creux (9), de préférence des rainures, ne sont pas dotées de cette rugosité (5) mais sont lisses et
**en ce que** la rugosité (5) est formée par application d'une couche de projection thermique sur les surfaces de moulage (2) des segments (1) du moule de vulcanisation.

2. Moule de vulcanisation selon la revendication 1, **caractérisé en ce que** certaines parties du segment de coquille latérale du moule de vulcanisation qui forme la paroi latérale du bandage de roue (6, 12) à vulcaniser sont dotées d'une rugosité (5).

3. Moule de vulcanisation selon l'une des revendications précédentes, **caractérisé en ce que** la rugosité (5) est formée par un profil de surface de 5 à 50 µm, de préférence de 7,5 à 15 µm et de façon particulièrement préférable de 9,5 à 15 µm.

4. Moule de vulcanisation selon la revendication 1, **caractérisé en ce que** la couche de projection thermique est constituée d'une matrice et d'additifs de projection répartis statistiquement dans la matrice, les additifs de projection définissant la rugosité.

5. Moule de vulcanisation selon les revendications 1 ou 4, **caractérisé en ce que** les additifs sont des grains.

6. Moule de vulcanisation selon l'une ou plusieurs des revendications précédentes, **caractérisé en ce que** les parties (3) des surfaces de moulage (2) des segments de moule (1) qui forment la surface d'enveloppe du profil de la bande de roulement sont entièrement dotées de la rugosité (5) et **en ce qu'**une partie des saillies (4) qui forment les creux, de préférence des rainures, n'est pas dotée de cette rugosité (5).

7. Moule de vulcanisation selon l'une ou plusieurs des revendications précédentes, **caractérisé en ce que** le moule de vulcanisation est un moule de vulcanisation divisé en son centre.

8. Moule de vulcanisation selon l'une ou plusieurs des revendications 1 à 6, **caractérisé en ce que** le moule de vulcanisation est un moule de vulcanisation segmenté qui présente plusieurs segments extérieurs de moulage (1) déplaçables radialement et maintenus ensemble par une structure annulaire qui les entoure et qui présente une surface glissante tournée vers les segments de moulage (1).

9. Moule de vulcanisation selon l'une ou plusieurs des revendications précédentes, **caractérisé en ce que** le moule de vulcanisation peut être utilisé pour vulcaniser un bandage de roue (6) d'un deux-roues, en particulier d'un deux-roues motorisé, et pour vulcaniser un bandage de roue (12) pour voiture automobile, en particulier d'un bandage de roue à performances ultraélevées.

10. Bandage de roue vulcanisé à l'aide d'un moule de Vulcanisation selon l'une ou plusieurs des revendications 1 à 8, **caractérisé en ce que**
le bandage de roue (6, 12) présente un profil (7) de bande de roulement dont la surface d'enveloppe (8) du profil de bande de roulement présente une rugosité (5), tandis que la totalité ou une partie de ces creux, par exemple des rainures (9), ne présentent pas cette rugosité (5) mais sont lisses.

11. Bandage de roue selon la revendication 10, **caractérisé en ce que** la profondeur de la rugosité de la surface d'enveloppe de roulement est de 5 à 50 µm et de préférence de 7,5 à 15 µm.

12. Bandage de roue selon l'une des revendications 10 et 11, **caractérisé en ce que** le bandage de roue est un bandage (6) de roue d'un deux-roues motorisé, un bandage (12) de voiture automobile, un bandage de roue d e véhicule utilitaire léger ou un bandage de roue de camion.
